**Europäisches Patentamt**

**European Patent Office**

**Office européen des brevets**

(19)

(11) Veröffentlichungsnummer: **0 012 190**
**B1**

(12) EUROPÄISCHE PATENTSCHRIFT

(45) Veröffentlichungstag der Patentschrift:
16.06.82

(51) Int. Cl.³: **G 02 B 7/26**

(21) Anmeldenummer: **79104129.6**

(22) Anmeldetag: **24.10.79**

(54) Abzweigelement für Monomode-Lichtwellenleiter und Verfahren zu seiner Herstellung.

(30) Priorität: **29.11.78 DE 2851667**

(43) Veröffentlichungstag der Anmeldung:
**25.06.80 Patentblatt 80/13**

(45) Bekanntmachung des Hinweises auf die Patenterteilung:
**16.06.82 Patentblatt 82/24**

(84) Benannte Vertragsstaaten:
**FR GB**

(56) Entgegenhaltungen:
**DE-A-2 611 011**

**IEEE TRANSACTIONS ON MICROWAVE THEORY AND TECHNIQUES, Band MTT-23, Nr. 1, Januar 1975 New York H. KUWAHARA et al. «A semi-transparent mirror-type directional coupler for optical fiber applications», Seiten 179 bis 180**

**NACHRICHTENTECHNISCHE ZEITSCHRIFT, Band 31, Nr. 2, 1978 Berlin M. RODE et al. «Ein Rückstreuverfahren zur Untersuchung von Lichtleitfasern», Seiten 144 bis 146**

**Patents Abstracts of Japan Band 2, Nr. 139, 17. November 1978, Seite 8619 E 78 & JP-A-53-106 140**

(73) Patentinhaber: **SIEMENS AKTIENGESELLSCHAFT
Berlin und München, Postfach 22 02 61,
D-8000 München 22 (DE)**

(72) Erfinder: **Winzer, Gerhard, Dr., Günderodestrasse 16,
D-8000 München 82 (DE)**
Erfinder: **Auracher, Franz, Dr., Stapferstrasse 4,
D-8000 München 60 (DE)**

**IBM TECHNICAL DISCLOSURE BULLETIN, Band 20, Nr. 9, Februar 1978 New York F.P. CEFARELLI et al. «Three-fiber system for optical interconnections», Seiten 3 571 bis 3 572**

**Patents Abstracts of Japan Band 1, Nr. 129, 25. Oktober 1977, Seite 5 861**

**ELECTRONICS LETTERS, Band 13, Nr. 25, Dezember 1977 C.C. TIMMERMANN «Transverse light coupling from gaAs lasers into optical fibres», Seiten 766 bis 767**

Abzweigelement für Monomode-Lichtwellenleiter und Verfahren zu seiner Herstellung

Die vorliegende Erfindung bezieht sich auf ein Abzweigelement zum Auskoppeln eines Lichtanteils aus einem Monomode-Lichtwellenleiter (Monomodeleiter) und ein Verfahren zu seiner Herstellung.

Das Auskoppeln eines Lichtanteils aus einem Lichtwellenleiter mittels teildurchlässiger Spiegelschicht ist aus «Nachrichtentechnische Zeitschrift», Band 31, Nr. 2 1978, Berlin, oder aus den Patentsabstracts of Japan, Band 2, Nr. 139, 17. November 1978, Seite 8 619 E78 bekannt. Ein weiterer Lichtleiter für den ausgekoppelten Lichtanteil ist jedoch hieraus nicht entnehmbar. Der Übergang von Monomodeleitern auf Multimodeleitern ist beispielsweise aus der DE-AS 2 611 011 bekannt.

Monomode-Lichtwellenleiter, bevorzugt in Form von Glasfaser-Lichtleitern, sind zur Übertragung von Lichtsignalen ohne Zwischenverstärkung über sehr weite Strecken (mehrere 10 km) besonders geeignet. Um längs der Strecke Geräte an einen solchen Monoleiter anschliessen zu können, sind Abzweigelemente erforderlich, die einen Lichtanteil aus dem Monomodeleiter auskoppeln und ihn dem Gerät zuführen. Aufgabe der vorliegenden Erfindung ist es, ein solches Abzweigelement anzugeben, welches einen guten Koppelwirkungsgrad aufweist und welches zudem billig und einfach herstellbar ist.

Die Aufgabe wird durch die im kennzeichnenden Teil des Patentanspruchs 1 angegebenen Massnahmen gelöst.

Dadurch, dass der abzweigende Lichtwellenleiter aus einem Multimode-Lichtwellenleiter (Multimodeleiter) besteht, kann zwar das abgezweigte Lichtsignal nicht über so weite Strecken übertragen werden, wie mit einem Monomodeleiter, jedoch ist dies in der Praxis auch in der Regel nicht notwendig, da die am Monomodeleiter liegenden Geräte meist relativ nahe bei ihm liegen und so die Multimodeleiter völlig ausreichen werden. Der entscheidende Vorteil der Verwendung eines Multimodeleiters für den abzweigenden Lichtwellenleiter liegt darin, dass bei ihm im Vergleich zum Monomodeleiter der Querschnitt des lichtführenden Teils erheblich grösser ist, so dass das vorgeschlagene Abzweigelement ohne Präzisionsjustierung hergestellt werden kann und dabei einen guten Koppelwirkungsgrad aufweist.

Ausserdem bietet das verwendete Bauprinzip mit der teildurchlässigen Spiegelschicht einen erheblichen herstellungstechnischen Vorteil. Das Abzweigelement kann nämlich in einem selbstjustierenden Verfahren hergestellt werden, was für die Ausrichtung der beiden Monomodeleiter von entscheidender Bedeutung ist. Dieses vorteilhafte selbstjustierende Verfahren geht aus dem kennzeichnenden Teil des Patentanspruchs 2 hervor.

Ein die Erfindung benutzendes Anwendungsbeispiel wird anhand der Figuren im folgenden näher erläutert. Es zeigen:

Fig. 1 in schematischer Darstellung eine Anordnung, bei der ein Teil der in einer Monomode-Lichtleitfaser geführten Lichtleistung ausgekoppelt und einem Detektor zugeführt wird, der als Istwertgeber für eine Regelschaltung dient, über die der Diodenstrom für eine Laserdiode so gesteuert wird, dass der Leistungspegel in der Faser trotz Alterung in der Laserdiode konstant bleibt und

Fig. 2 in vergrösserter Darstellung das Abzweigelement, mit dem Licht aus der Monomode-Faser über die teildurchlässige Spiegelschicht ausgekoppelt und in die Multimode-Faser wieder eingekoppelt wird.

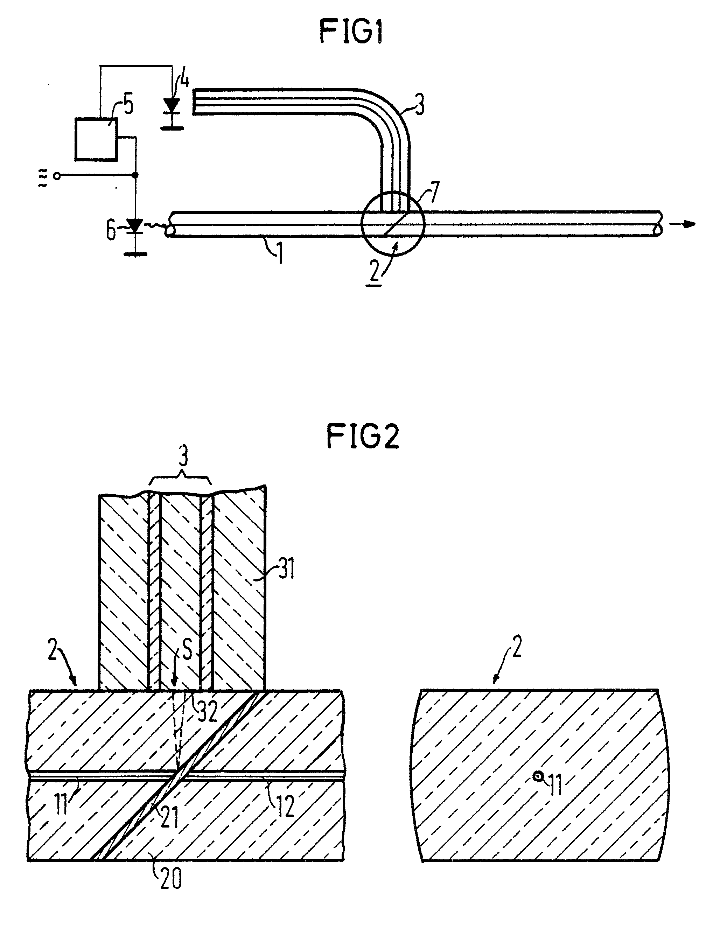

In der Fig. 1 ist die Monomode-Faser mit 1 bezeichnet. In dieser Faser ist das Abzweigelement 2 angeordnet. Die abzweigende Multimode-Faser ist mit 3 bezeichnet und führt zum lichtempfindlichen Detektor 4. Dieser Detektor 4 ist an eine Regelschaltung 5 gekoppelt und liefert den Istwert für diese. Die Regelschaltung 5 steuert den Strom für die Laserdiode 6, deren Licht in die Monomode-Faser 1 eingekoppelt wird, so dass der Leistungspegel in der Faser trotz Alterung der Laserdiode konstant bleibt.

In der Fig. 2 ist der Bereich des Kreises 7 in der Fig. 1, in dem sich das Abzweigelement 2 befindet, vergrössert dargestellt. Das Abzweigelement ist dabei als Schnitt längs der Achsen der beiden Fasern 1 und 3 dargestellt und rechts neben dem im Längsschnitt dargestellten Gebilde 2 ist noch dessen Querschnitt dargestellt.

Beim Gebilde 2 besteht der Körper 20 aus einer Glaskapillare, in deren Öffnung zwei fluchtende Monomodeleiter 11 und 12 befestigt sind, die durch die schief dazu im Körper 20 angeordnete teildurchlässige Spiegelschicht 21 voneinander getrennt sind. Die beiden Monomodeleiter 11 und 12 bilden dabei zwei Teile des Monomodeleiters 1 in Fig. 1. Auf das Gebilde 2 ist die in einem weiteren Körper 31 befestigte und mit dem Gebilde 2 fest verbundene Multimodefaser 3 aufgesetzt, die so angeordnet ist, dass ihre aufgesetzte Stirnfläche 32 über einer Stelle S angeordnet ist, aus der Licht aus dem Gebilde 2 austritt, das von dem Monomodeleiter 11 ausgekoppelt und von der Spiegelschicht 21 reflektiert worden ist und dass der Winkel zwischen dem Multimodeleiter 3 und dem Monomodeleiter 11 durch die Flächennormale der Spiegelschicht 21 zumindest annähernd halbiert wird. Annähernd bedeutet dabei, dass Winkelabweichungen, die kleiner sind als der halbe Akzeptanzwinkel des Multimodeleiters zuzüglich dem des Monomodeleiters zulässig sind. Es ist jedoch am besten, wenn keine solche Winkelabweichungen vorhanden sind. Im Ausführungsbeispiel nach Fig. 2 beträgt der Winkel zwischen Multimode- und Monomodeleiter 90° und die Spiegelschicht ist um 45° zum Monomodeleiter geneigt.

Da der Querschnitt des lichtführenden Teils der Multimodefaser erheblich grösser (einige 10 µm und mehr) als der der Monomodefaser (höchstens

einige μm) braucht beim Aufsetzen der Multimodefaser auf das Gebilde 2 keine Feinjustierung vorgenommen werden, da seitliche Versätze von knapp dem Durchmesser des Multimodeleiters noch zulässig sind.

Das ganze Abzweigelement wird selbstjustierend so hergestellt, dass ein Ausgangskörper, in dem ein durchgehender Monomodeleiter befestigt ist, durch einen schräg zum Monomodeleiter geführten Schnitt in zwei Teile zerlegt wird. Der Schnitt wird dabei so geführt, wie die vorgesehene Spiegelschicht zum Monomodeleiter geneigt ist. Die Schnittflächen werden poliert und dadurch auf optische Qualität gebracht. Auf eine der beiden polierten Schnittflächen wird die teildurchlässige Spiegelschicht aufgebracht, beispielsweise durch Bedampfen. Die beiden Körperteile werden dann wieder zusammengebracht und miteinander verklebt. Dieses Zusammenbringen geschieht nun selbstjustierend. Dazu muss der Ausgangskörper der Länge nach zwei im Winkel zueinander stehende Anschlagflächen aufweisen, parallel zu denen der Monomodeleiter verläuft. Die beiden getrennten Teile des Ausgangskörpers, die wieder zusammengebracht werden sollen, werden nun mit einer Anschlagfläche auf eine Oberfläche eines mit einem geradlinig verlaufenden Anschlags versehenen Substrats so gelegt, dass sie mit der anderen Anschlagfläche am Anschlag anliegen und dass die beiden Schnittflächen einander gegenüberliegen und parallel zueinander sind. Die beiden Teile werden dann durch Verschieben längs des Anschlags zusammengebracht und miteinander fest verbunden, beispielsweise durch einen optischen Kleber. Die Genauigkeit dieses Verfahrens hängt lediglich von der Güte der Anschlagflächen, der Oberfläche des Substrats und des Anschlags ab. Durch Polieren der Flächen erhält man eine sehr hohe Genauigkeit, so dass kaum Verluste durch seitlichen Versatz der beiden Monomodeleiter 11 und 12 nach dem Zusammenbringen der beiden Körperteile auftreten.

Danach wird der im weiteren Körper 31 befestigte Multimodeleiter aufgesetzt. Dazu ist es zweckmässig, wenn die sich berührenden Flächen des Gebildes und des weiteren Körpers sowie des Multimodeleiters eben sind.

Beim Aufsetzen des Multimodeleiters auf das Gebilde 2 ist allerdings ein Justierschritt erforderlich, jedoch kein Präzisionsjustierschritt, wie es vorstehend schon erläutert wurde.

Anstelle einer Kapillare als Körper oder weiterer Körper kann auch ein Körper verwendet werden, bei dem in eine Oberfläche eine Führungsnut eingebracht ist, in der der Monomode- oder Multimodeleiter befestigt ist. Besonders geeignet sind dabei Kristalle, welche die Eigenschaft besitzen, dass sie anisotrop geätzt werden können (Vorzugsätzen), wie dies beispielsweise bei Silizium der Fall ist. Die Nuten werden dann vorzugsweise durch anisotropes Ätzen hergestellt.

## Patentansprüche

1. Abzweigelement zum Auskoppeln eines Lichtanteils aus einem Monomode-Lichtwellenleiter (Monomodeleiter), gekennzeichnet durch ein Gebilde (2) aus einem Körper (20), in dem zwei fluchtende Monomodeleiter (11 und 12) befestigt sind, die durch eine schief dazu im Körper (20) angeordnete teildurchlässige Spiegelschicht (21) voneinander getrennt sind und durch einen auf das Gebilde aufgesetzten, in einem weiteren Körper (31) befestigten und mit dem Gebilde fest verbundenen Multimode-Lichtwellenleiter (Multimodeleiter) (3), der so angeordnet ist, dass seine aufgesetzte Stirnfläche (32) über einer Stelle (S) angeordnet ist, aus der Licht aus dem Gebilde austritt, das von einem (11) der Monomodeleiter ausgekoppelt und von der Spiegelschicht reflektiert worden ist, und dass der Winkel zwischen dem Multimodeleiter und dem einen Monomodeleiter durch die Flächennormale der Spiegelschicht zumindest annähernd halbiert wird.

2. Verfahren zur Herstellung eines Abzweigelements nach Anspruch 1, dadurch gekennzeichnet, dass ein Ausgangskörper, in dem ein durchgehender Monomodeleiter befestigt ist und der zwei im Winkel zueinander stehende Anschlagflächen aufweist, parallel zu denen der Monomodeleiter angeordnet ist, durch einen schräg dazu geführten Schnitt in zwei Teile zerlegt wird, dass die Schnittflächen auf optische Qualität gebracht werden, dass auf eine der Schnittflächen die teildurchlässige Spiegelschicht aufgebracht wird, dass dann die beiden Teile mit einer Anschlagfläche auf eine Oberfläche einer mit einem geradlinig verlaufenden Anschlag versehenen Unterlage so gelegt werden, dass die andere Anschlagfläche am Anschlag anliegt und die beiden Schnittflächen einander gegenüberliegen und parallel zueinander sind und dass dann die beiden Teile durch Verschieben längs des Anschlags zusammengebracht und miteinander fest verbunden werden.

## Claims

1. A branch element for output coupling a component of light from a monomode light waveguide (monomode guide), characterised in that an assembly (2) consisting of a body (20) in which two aligned monomode guides (11 and 12) are fixed, which monomode guides are separated from one another by a semi-transparent reflective layer (21) arranged obliquely to the monomode guides in the body (20), and by a further multimode light waveguide (multimode guide) (3) placed on the assembly and secured in a further body (31) and firmly connected to the assembly and so arranged that its superimposed end face (32) is above a point (S) from which light emerges from the assembly, which light has been output coupled from one (11) of the monomode guides by reflection from the reflective layer, and that the angle between the multimode guide and the one monomode guide is at least approximately halved by the surface normal of the reflective layer.

2. A method for the production of a branch element as claimed in claim 1, characterised in that an output body in which is fixed a continuous monomode guide and which has two stop surfaces which are at an angle to one another is arranged parallel to the stop surfaces of the monomode guides and divided into two parts by an obliquely directed cut, the intersecting planes are brought to optical quality, the semi-transparent reflective layer is applied to one of the intersecting planes, and that by means of one stop surface, the two parts are then placed onto a surface of a base provided with a rectilinear stop, in such manner that the other stop surface adjoins the stop and the two intersecting planes are opposite to one another and parallel to one another and that the two parts are brought together along the stop by shifting, and firmly connected to one another.

## Revendications

1. Elément de dérivation pour découpler une partie de la lumière de guides d'ondes lumineuses monomode (conducteur monomode), caractérisé par une structure (2) comportant un corps (20) dans lequel sont fixés deux conducteurs monomode alignés (11 et 12) séparés entre eux par une couche réfléchissante (21) semi-transparente, disposés dans le corps en position oblique par rapport aux deux conducteurs, et par un guide d'ondes lumineuses multimode (conducteur multimode) (3) fixé dans un second corps, solidarisé de la structure et disposé de telle manière que sa face frontale d'application (32) contre la structure est disposé au-dessus d'un emplacement (S) au niveau duquel émerge de la structure de la lumière qui a été découplée de l'un (11) des conducteurs monomode et qui a été réfléchie par la couche réfléchissante, et que l'angle entre le conducteur multimode et ledit conducteur monomode (11) est au moins sensiblement divisé par deux par la normale à la surface réfléchissante.

2. Procédé pour réaliser un élément de dérivation selon la revendication 1, caractérisé par le fait qu'un corps de départ, dans lequel est fixé un conducteur monomode d'un seul tenant et qui comporte deux surfaces de butée faisant un certain angle entre elles et en parallèle auxquelles est disposé le conducteur monomode, et subdivisé par une coupe oblique par rapport à ce dernier, en deux parties, que les surfaces de coupe sont traitées à la qualité optique, que sur l'une des faces de coupe est disposée la couche réfléchissante semi-transparente, qu'ensuite les deux parties sont placées par une surface de butée sur la surface d'un support pourvu d'une butée s'étendant en ligne droite de manière que l'autre face de butée porte contre la butée, et que les deux surfaces de coupe se situent face à face et en position parallèle, et qu'ensuite les deux parties sont assemblées par déplacement le long de la butée et sont fixées entre elles.

# FIG1

# FIG2